# EUROPÄISCHE PATENTANMELDUNG

(11) **EP 4 385 333 A1**
(43) Veröffentlichungstag der Anmeldung: **19.06.2024**
(21) Anmeldenummer: 22213925.5
(22) Anmeldetag: 15.12.2022
(51) Int. Cl.: A23C 19/032, A23C 19/068, A23C 19/076, A23C 20/00

(54) **KALORIENARME LEBENSMITTEL**

(71) Anmelder: DMK Deutsches Milchkontor GmbH, 27404 Zeven (DE)
(72) Erfinder: DÖRING, Sven-Rainer, 27404 Zeven (DE); Steffens, Marco, 27404 Elsdorf (DE)
(74) Vertreter: Fabry, Bernd

(57) **Zusammenfassung**

Vorgeschlagen werden kalorienarme Lebensmittel, erhalten oder erhältlich durch die folgenden Schritte:
(a) Bereitstellen einer wässrigen Lösung enthaltend, bestehend oder weitgehend bestehend aus Milchproteinen und Lactose;
(b) Konzentrierung der wässrigen Lösung aus Schritt (a);
(c) Entkeimung der wässrigen Lösung aus Schritt (b) durch Pasteurisierung oder Mikrofiltration;
(d) Transgalactosilierung der in der entkeimten wässrigen Lösung aus Schritt (c) vorhandenen Milchzucker unter Zugabe mindestens einer beta-Galactosidase innerhalb deren optimalen Temperatur- und pH-Wert-Intervalls über einen Zeitraum von mindestens 30 Minuten unter Erhalt einer Reaktionsmischung,
(e) Desaktivierung der Enzymmasse in der Reaktionsmischung aus Schritt (d) durch thermische Behandlung über einen Zeitraum von etwa 1 bis etwa 15 Minuten und
(f) Konfektionierung des so erhaltenen Produktes.

## Beschreibung

### GEBIET DER ERFINDUNG

Die vorliegende Patentanmeldung betrifft ein Produkt und ein Verfahren zur Herstellung von kalorienarmen Lebensmitteln, insbesondere Käseersatzstoffen, enthaltend oligomere Kohlenhydrate und Proteine basierend auf Magermilch.

### TECHNOLOGISCHER HINTERGRUND

Galactooligosaccharide (GOS) 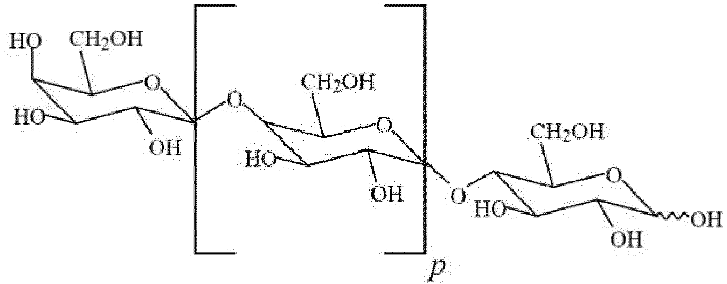 auch bekannt als Oligogalaktosyllactose, Oligogalaktose, Oligolaktose oder Transgalaktooligosaccharide (TOS), gehören zur Gruppe der Präbiotika. GOS kommt in handelsüblichen Produkten wie Nahrung für Säuglinge und Erwachsene vor.

Aufgrund der Konfiguration ihrer glykosidischen Bindungen widerstehen Galactooligosaccharide (GOS) weitgehend der Hydrolyse durch Speichel- und Darmverdauungsenzyme. Galactooligosaccharide werden daher als Präbiotika eingestuft, definiert als unverdauliche Nahrungsbestandteile, die sich vorteilhaft auf den Wirt auswirken, indem sie das Wachstum und/oder die Aktivität nützlicher Bakterien im Dickdarm stimulieren. Die erhöhte Aktivität dieser gesundheitsfördernden Bakterien führt zu einer Reihe von Effekten, sowohl direkt durch die Bakterien selbst als auch indirekt durch die organischen Säuren, die sie durch Fermentation produzieren. Beispiele für Wirkungen sind die Stimulierung der Immunfunktionen, die Aufnahme essentieller Nährstoffe, und die Synthese bestimmter Vitamine.

Galactooligosaccharide sind ein Substrat für Bakterien, wie Bifidobakterien und Laktobazillen. Studien mit Säuglingen und Erwachsenen haben gezeigt, dass mit Galakto-Oligosacchariden angereicherte Lebensmittel oder Getränke zu einer signifikanten Zunahme von Bifidobakterien führen. Diese Zucker kommen natürlich in der menschlichen Milch vor und sind als Oligosaccharide der menschlichen Milch bekannt. Beispiele sind Lakto-N-Tetraose, Lakto-N-Notetraose und Lakto-N-Fucopentaose.

Die menschliche Darmmikrobiota spielt eine Schlüsselrolle im intestinalen Immunsystem. Galacto-Oligosaccharide unterstützen die natürlichen Abwehrkräfte des menschlichen Körpers über die Darmmikroflora, indirekt, indem sie die Anzahl der Bakterien im Darm erhöhen und die Bindung oder das Überleben von *Escherichia coli, Salmonella Typhimurium* und Clostridien hemmen. GOS können das Immunsystem indirekt durch die Produktion von antimikrobiellen Substanzen positiv beeinflussen, indem sie die Vermehrung von pathogenen Bakterien reduzieren. Verstopfung ist ein potenzielles Problem, insbesondere bei Säuglingen, älteren Menschen und schwangeren Frauen. Bei Säuglingen kann die Fütterung mit Säuglingsnahrung mit Verstopfung und hartem Stuhl assoziiert sein. GOS können die Stuhlfrequenz verbessern und die mit der Verstopfung verbundenen Symptome lindern.

Die typische Gewinnung von GOS umfasst die folgenden Schritte:
1. Konzentrierung einer Milchzuckerlösung (Lactose, Sauermolke, Milchpermeat mit dem Ziel einen Lactosegehalt von mindestens 30 Gew.-% zu erreichen;
2. Hocherhitzung/UHT-Behandlung zur Entkeimung bei 85-140 C über 5 bis 300 s;
3. Zugabe des Enzyms (z.B.*Aspergillus Oryzae*) und Einstellung der für das Enzym optimalen pH- und Temperaturbedingungen (z.B. pH =4,5, 55 C);
4. Verweilzeit in der Regel über 30 bis maximal 1200 min (abhängig vom Enzym), da ansonsten eine Rückspaltung erfolgt;
5. Thermische Inaktivierung des Enzyms beispielsweise durch Hochtemperaturpasteurisierung (90 °C, 10 min)
6. Aufreinigung, gegebenenfalls Konzentrierung, Sprühtrocknung.
Eine Übersicht zur Herstellung von Galactooligosacchariden findet sich auch von *K. Zerge* in einer Online-Publikation der Universität Dresden:
https://nbn-resolving.org/urn:nbn:de:bsz:14-qucosa-157121

### RELEVANTER STAND DER TECHNIK

EP 2620506 B1 (DUPONT) betrifft die Gewinnung von GOS ausgehend von Lactitol.

EP 3598901 B1 (HOCHSCHULE ANHALT) betrifft ein Verfahren zur Herstellung von GOS, bei dem man eine von L.bulgaricus (L.delbrueckii spp.bulgaricus) abgeleitete beta-Galactosidase bei einer Temperatur von 37 C oder weniger mit einer Lactose-haltigen Zusammensetzung wie Milch, Puffer oder Molke, z.B. Süßmolke, Sauermolke, Molkenkonzentrat oder Molkenpermeat, inkubiert.

EP 3041945 B1 (FRIESLAND) stellt ein Verfahren zur Herstellung von GOS aus Lactose bereit, das (i) das Inkontaktbringen einer Lactosebeschickung mit immobilisierter beta-Galactosidase (EC 3.2.1.23) und (ii) das Ermöglichen der GOS-Synthese umfasst, wobei die Lactosebeschickung eine wässrige Aufschlämmung von kristalliner Lactose ist.

WO 2008 037839 A1 (VALIO) bezieht sich auf ein Verfahren zur Herstellung von GOShaltigen Produkten auf Milchbasis durch Behandlung mit einer beta-Galactosidase.

WO 2018 048305 A1 (UNIV GRONINGEN) beschreibt die Verwendung einer GOS-Zusammensetzung, die verzweigte und lineare GOS-Spezies mit einem Polymerisationsgrad (DP) von 3 umfasst, wobei die verzweigten DP3-GOS-Spezies im Überschuss gegenüber den linearen DP3-GOS-Spezies vorhanden sind, zur Induktion von Mucin-Glykan-Verwertungswegen in nützlichen Darmbakterien in einem Tier.

WO 2018 210820 A1 (NOVOZYMES) beansprucht ein Verfahren, bei dem Milchsubstrat mit einem Laktosegehalt von mindestens 20 Gew.-% Laktose wird mit einem Enzym mit transgalaktosylierender Aktivität behandelt wird. Die transgalaktosylierende Aktivität des Enzyms kann durch Glykation von Lysin- und/oder Argininresten durch Inkubation des Enzyms mit hohen Glukosekonzentrationen bei erhöhten Temperaturen erhöht worden sein.

WO 2020 049016 A1 (FRIESLAND) bezieht sich auf das Gebiet der hypoallergenen Oligosaccharide zur Verwendung in Nahrungszusammensetzungen, insbesondere auf Oligosaccharide mit präbiotischen Eigenschaften. Es wird eine hypoallergene Oligosaccharid-Zusammensetzung bereitgestellt, die Galactooligosaccharide (GOS) umfasst, wobei (i) der Gehalt an Galactooligosacchariden (GOS) mindestens 40 Gew.-% der Gesamttrockensubstanz der Zusammensetzung beträgt; (ii) der Gehalt an Allolactose mindestens 10 Gew.-% der Gesamttrockensubstanz der Zusammensetzung beträgt; (iii) der Gehalt an 6'-GL mindestens 30 Gew.-% der Gesamt-GOS in der Zusammensetzung beträgt; und (iv) mindestens 0. 5 Gewichtsprozent des gesamten GOS einen Polymerisationsgrad (DP) von sechs oder mehr aufweisen.

WO 2020 117548 A1 (DUPONT) betrifft ein Verfahren zur Bereitstellung eines laktosearmen Produkts auf Milchbasis mit GOS-Fasern, bei dem ein Milchsubstrat mit Laktose mit einem transgalaktosylierenden Enzym behandelt wird, um GOS-Fasern und verbleibende Laktose bereitzustellen; Deaktivieren des transgalaktosylierenden Enzyms; Inkontaktbringen des Substrats auf Milchbasis mit GOS-Fasern mit einer Laktase, um die verbleibende Laktose abzubauen, um das laktosearme Produkt auf Milchbasis mit GOS-Fasern bereitzustellen, und Deaktivieren der Laktase.

WO 2020 141032 A1 (FRIESLAND) bezieht sich auf das Gebiet der Nahrungsmittelbestandteile, insbesondere auf wirtschaftlich attraktive Verfahren zur Herstellung von hypoallergenen Galactooligosacchariden (HA-GOS) und deren Verwendung in Nahrungs- und Futtermitteln. Es wird ein Verfahren zur Herstellung eines HA-GOS-Präparats bereitgestellt, das das Inkontaktbringen eines Lactose-Einsatzmaterials mit einer speziellen beta-Galactosidase (EC 3.2.1.23) umfasst, wobei das Lactose-Einsatzmaterial ein Käsemolkenpermeat (CWP) oder ein CWP ist, das mit Sialyllactose angereichert ist (SL-CWP).

### AUFGABE DER ERFINDUNG

Es besteht Bedarf an Lebensmitteln auf Basis von GOS, welche zusätzlich zu einem hohen Kohlenhydratanteil auch einen hohen Proteinanteil aufweisen, jedoch kein Fett enthalten und daher kalorienarm sind und sich insbesondere als Käseersatzstoffe eignen.

### BESCHREIBUNG DER ERFINDUNG

Ein erster Gegenstand der Erfindung betrifft daher kalorienarme Lebensmittel, erhalten oder erhältlich durch die folgenden Schritte:
(a) Bereitstellen einer wässrigen Lösung enthaltend, bestehend oder weitgehend bestehend aus Milchproteinen und Lactose;
(b) Konzentrierung der wässrigen Lösung aus Schritt (a);
(c) Entkeimung der wässrigen Lösung aus Schritt (b) durch Pasteurisierung oder Mikrofiltration;
(d) Transgalactosilierung der in der entkeimten wässrigen Lösung aus Schritt (c) vorhandenen Milchzucker unter Zugabe mindestens einer beta-Galactosidase innerhalb deren optimalen Temperatur- und pH-Wert-Intervalls über einen Zeitraum von mindestens 30 Minuten unter Erhalt einer Reaktionsmischung,
(e) Desaktivierung der Enzymmasse in der Reaktionsmischung aus Schritt (d) durch thermische Behandlung über einen Zeitraum von etwa 1 bis etwa 20 Minuten vorzugsweise bei etwa 85 bis etwa 95 °C und
(f) Konfektionierung des so erhaltenen Produktes.

Überraschenderweise wurde gefunden, dass bei der Desaktivierung des zugegebenen Enzyms während der Herstellung von GOS-Zubereitungen vorzugsweise aus Magermilch oder Magermilchkonzentraten, ein starker Anstieg der Viskosität zu beobachten ist, wobei das Produkt je nach Dauer der thermischen Behandlung Produkte mit der Konsistenz beispielsweise von Schnittkäse (1 min), Mozzarella (10 min) oder Frischkäse (15 min) erhalten werden.

Bei der Verwendung der bisherigen Ausgangsstoffe für GOS-Zubereitungen, welche keine Proteine enthalten, führt thermische Desaktivierung der beigefügten Enzyme nicht zu einer signifikanten Erhöhung der Viskosität. Auch bei Desaktivierung der Enzyme durch pH-Änderung wird der Effekt nicht beobachtet. Es handelt sich hier folglich um ein völlig neues Produkt, das kalorienarm und fettfrei ist, jedoch große Mengen and Proteinen sowie Galactooligosaccharide enthält.

Außerdem basiert das erfindungsgemäße Produkt auf einem wenig verarbeiteten natürlichen Produkt, nämlich Magermilch, und stellt ein für die menschliche und tierische Ernährung geeignete Zubereitung dar, welche effizient die nährreichen Bestandteile der Magermilch extrahiert und dabei kostengünstig in der Herstellung ist.

### Lebensmittel

In einer bevorzugten Ausführungsform der Erfindung können die GOS-Produkte weitere Hilf- und Zusatzstoffe beispielsweise in den folgenden Mengen enthalten:
(i) etwa 5 bis etwa 20 Gew.-%, vorzugsweise etwa 10 bis etwa 18 Gew.-% und insbesondere etwa 12 bis etwa 15 Gew.-% des Produktes gemäß Anspruch 1,
(ii) 0 bis etwa 20 Gew.-%, vorzugsweise etwa 1 bis etwa 15 und insbesondere etwa 5 bis etwa 10 Gew.-% pflanzliche Proteine;
(iii) 0 bis etwa 20 Gew.-%, vorzugsweise etwa 1 bis etwa 15 und insbesondere etwa 5 bis etwa 10 Gew.-% pflanzliche Fette;
(iv) 0 bis etwa 10 Gew.-%, vorzugsweise etwa 1 bis etwa 8 und insbesondere etwa 2 bis etwa 5 Gew.-% Aromastoffe;
(v) 0 bis etwa 2 Gew.-%, vorzugsweise etwa 0,5 bis etwa 1,5 Gew.-% Ballaststoffe;
(vi) 0 bis etwa 2 Gew.-%, vorzugsweise etwa 0,5 bis etwa 1,5 Gew.-% Verdickungsmittel;
(vii) 0 bis etwa 2 Gew.-%, vorzugsweise etwa 0,5 bis etwa 1,5 Gew.-% Genusssäuren;
(viii) 0 bis etwa 2 Gew.-%, vorzugsweise etwa 0,5 bis etwa 1,5 Gew.-% Salze;
(ix) 0 bis etwa 1 Gew.-% Lab;
(x) 0 bis etwa 0,5 Gew.-% Farbstoffe

mit der Maßgabe, dass sich die Mengenangaben gegebenenfalls mit Wasser zu 100 Gew.-% ergänzen.
mit der Maßgabe, dass sich die Mengenangaben gegebenenfalls mit Wasser zu 100 Gew.-% ergänzen.

### Pflanzliche Proteine

Pflanzliche Proteine im Sinne der Erfindung (Komponente ii) können aus Kartoffeln, Soja, Erbsen, Lupinen, Raps oder anderen proteinreichen Früchten wie z. B. Sonnenblumen- oder Kürbiskernen u. a. m. gewonnen werden. Die geernteten proteinhaltigen Früchte werden mechanisch zerkleinert und entfettet. Es entstehen Flocken oder ein proteinreiches Pulver. Anschließend wird unter Verwendung von Lösungsmitteln ein Proteinkonzentrat gewonnen, das ggf. weiter zu Proteinisolat gereinigt und aufkonzentriert wird: Die Flocken oder Mehl werden mit Wasser versetzt und angemaischt. Die proteinarmen Fasern und Feststoffe werden im nächsten Schritt mit Hilfe von Industriezentrifugen von der proteinreichen Lösung abgetrennt. Dann folgt die sogenannte Ausfällung. Hier wird der pH-Wert der proteinreichen Lösung auf den isoelektrischen Punkt eingestellt. Dadurch setzen sich die Proteinpartikel ab. Diese werden dann wiederum mittels Zentrifugen von der Lauge abgetrennt. Um alle Bestandteile der Mutterlauge aus dem ausgefällten und abgetrennten Protein zu entfernen, wird das Protein erneut mit Wasser versetzt und wieder mit Hilfe der Zentrifugalkraft abgetrennt. Bei einer Trockenextrusion wird unter Zuführung von Wärme, Druck und Hilfsstoffen ein Zwischenprodukt mit niedrigem Wassergehalt erzeugt. Diese ebenfalls geeigneten Proteine werden als TVP (Texturized Vegetable Protein) bezeichnet und haben eine trockene Konsistenz in Form von Körnern, Streifen oder Flocken. Bei einer Nassextrusion wird alternativ mit einem höheren Wassergehalt operiert. Die Feuchtigkeit des Zwischenproduktes liegt daher näher am Wassergehalt des Endproduktes. Das Zwischenprodukt wird als HMMA (High Moistured Meat Analogues) bezeichnet.

### Pflanzliche Fette

Pflanzenfette (Komponente iii) stelle Lipide dar, die im Wesentlichen gesättigte Fettsäuren enthalten und daher bei Umgebungstemperatur fest vorliegen. Zu den festen Pflanzenfetten zählen vor allem Kokosfett, Palmfett, Palmkernfett und Sheabutter.

### Aromastoffe

Die erfindungsgemäßen Lebensmittel können einen oder mehrere Aromastoffe (Komponente iv) enthalten. Typische Beispiele umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

In einer bevorzugten Ausführungsform der vorliegenden Erfindung ist der Aromastoff ausgewählt aus der Gruppe bestehend aus Sahnearoma, Butter-Sahne-Aroma, Frischkäsearoma, Ziegenkäsearoma, Bergkäsearoma, natürliches Käsearoma, Käsearoma "Typ Gouda", Käsearoma "Typ Cheddar" oder Mischungen davon oder Aromastoffmischungen enthaltend einen solchen Aromastoff / eine solche Mischung sowie zudem noch einen oder mehrere weitere Aromastoffe.

Die Aromastoffe können auch in fester oder pastöser Form, beispielsweise als getrocknete Würzmischungen oder kleingeschnittene Kräuter zugegeben werden.

### Ballaststoffe

Ballaststoffe (Komponente v) sind weitgehend unverdauliche Nahrungsbestandteile, meistens Kohlenhydrate, welche meistens in pflanzlichen Lebensmitteln vorkommen und ein wichtiger Bestandteil der menschlichen Ernährung sind. In wiederum einer weiteren bevorzugten Ausführungsform der vorliegenden Erfindung ist der Ballaststoff ausgewählt aus der Gruppe bestehend aus Inulin, Johannisbrotkernmehl, Pektin, Dextrin, Maltodextrin, Cellulose, Lignin und Alginat oder Mischungen davon.

### Verdickungsmittel

Verdickungsmittel (Komponente vi) sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine sowie Hydrokolloide), die durch intermolekulare Wechselwirkungen, wie Wasserstoffbrücken, hydrophobe Wechselwirkungen oder lonenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können.

Als Verdickungsmittelkommt klassisch vor allem Gelatine in Betracht. Da tierisch basierte Produkte inzwischen vielfach unerwünscht sind, können alternativ pflanzliche Produkte verwendet werden, beispielsweise:
- E 400 -: Alginsäure
- E 401 -: Natriumalginat
- E 402 -: Kaliumalginat
- E 403 -: Ammoniumalginat
- E 404 -: Calciumalginat
- E 405 -: Propylenglycolalginat
- E 406 -: Agar Agar
- E 407 -: Carrgeen, Furcelleran
- E 407 -: Johannisbrotkernmehl
- E 412 -: Guarkernmehl
- E 413 -: Traganth
- E 414 -: Gummi arabicum
- E 415 -: Xanthan
- E 416 -: Karaya (Indischer Traganth)
- E 417 -: Tarakernmehl (Peruanisches Johannisbrotkernmehl)
- E 418 -: Gellan
- E 440 -: Pektin, Opekta
- E 440ii -: Amidiertes Pektin
- E 460 -: Mikrokristalline Cellulose, Cellulosepulver
- E 461 -: Methylcellulose
- E 462 -: Ethylcellulose
- E 463 -: Hydroxypropylcellulose
- E 465 -: Methylethylcellulose
- E 466 -: Carboxymethylcellulose, Natriumcarboxymethylcellulose

### Genusssäuren

Der Begriff "Genusssäure" (Komponente vii) bezeichnet organische Säuren, Fruchtsäuren oder Phosphorsäuren, welche aufgrund ihres Geschmacks und anderer lebensmitteltechnisch vorteilhaften Eigenschaften als Zusatzstoffe in der Lebensmittelproduktion eingesetzt werden. Vorzugsweise, im Rahmen der vorliegenden Erfindung, sind die Genusssäuren ausgewählt aus der Gruppe bestehen aus Milchsäure, Weinsäure, Essigsäure, Apfelsäure, Zitronensäure oder Fumarsäure. Auch wenn ein erfindungsgemäßes Lebensmittelprodukt solche Genusssäuren, die im Rahmen der vorliegenden Erfindung gegebenenfalls (auch) aufgrund ihres Geschmacks eingesetzt werden, enthalten kann, sind die Genusssäuren im Rahmen des vorliegenden Textes nicht dem "Aromastoff" im Sinne des Anspruchswortlauts zuzuordnen (für bevorzugt zu verwendende Aromastoffe s. unten). Solche (weiteren) Aromastoffe sind also stets zusätzlich enthalten.

### Weitere Zusatzstoffe

Weiterhin ist ein Lebensmittelprodukt im Kontext der vorliegenden Erfindung bevorzugt, welches mindestens einen weiteren Bestandteil umfasst, welcher ausgewählt ist aus der Gruppe bestehend aus Lab sowie mindestens einem Salz ausgewählt aus der Gruppe bestehend aus Natriumchlorid, Magnesiumchlorid und Kaliumchlorid, und/oder mindestens einem für Lebensmittel zugelassenen Farbstoff.

### Herstellverfahren

Ein zweiter Gegenstand der Erfindung betrifft ein Verfahren zur Herstellung von Galactooligosaccharidzubereitungen mit gelförmiger Konsistenz, erhalten oder erhältlich durch die folgenden Schritte:
(a) Bereitstellen einer wässrigen Lösung enthaltend, bestehend oder weitgehend bestehend aus Milchproteinen und Lactose;
(b) Konzentrierung der wässrigen Lösung aus Schritt (a);
(c) Entkeimung der wässrigen Lösung aus Schritt (b) durch Pasteurisierung oder Mikrofiltration;
(d) Transgalactosilierung der in der entkeimten wässrigen Lösung aus Schritt (c) vorhandenen Milchzucker unter Zugabe mindestens einer beta-Galactosidase innerhalb deren optimalen Temperatur- und pH-Wert-Intervalls über einen Zeitraum von mindestens 30 Minuten unter Erhalt einer Reaktionsmischung,
(e) Desaktivierung der Enzymmasse in der Reaktionsmischung aus Schritt (d) durch thermische Behandlung über einen Zeitraum von etwa 1 bis etwa 20 Minuten, vorzugsweise bei etwa 85 bis etwa 95 °C, und
(f) Konfektionierung des so erhaltenen Produktes.

### Einsatzstoffe zur Herstellung der GOS

Als Einsatzstoffe für die Herstellung von Galactooligosaccharidzubereitungen kommen als wässrige Protein- und Lactoselösungen proteinreiche Milchzuckerlösungen auf Basis von Magermilch oder Magermilchkonzentraten in Frage, die typischerweise einen Proteingehalt von etwa 10 bis etwa 20 Gew.-% und einen Lactosegehalt von etwa 15 bis etwa 30 Gew.-% aufweisen. Wesentlich und gemeinsam ist den geeigneten Einsatzstoffen, dass sie eine ausreichende Menge an Lactose, speziell an glykosidisch gebundener Galactose besitzen und zudem einen hohen Anteil an Proteinen aufweisen.

Lactose, Milchzucker oder Laktose ist ein in Milch enthaltener Zucker.

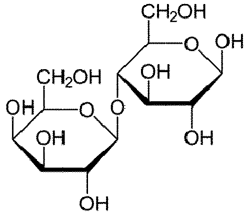

Das Disaccharid besteht aus den beiden Molekülen D-Galactose und D-Glucose, die über eine β-1,4-glycosidische Bindung miteinander verbunden sind. Nach IUPAC wird Lactose als 4-O-(β-D-Galactopyranosyl)-D-glucopyranose bezeichnet. Sie kommt als Hauptenergieträger in der Milch der Säugetiere vor. Lactose wird im Dünndarm vom Enzym Lactase verdaut, d. h. in Glucose und Galactose gespalten. In der Milch der Säugetiere sowie in Milcherzeugnissen macht Lactose fast den gesamten Anteil der Kohlenhydrate aus. Lactose, liefert Energie, unterstützt die Calcium-Resorption, hemmt Fäulnisbakterien im Darm des Menschen und begünstigt Bifidus-Bakterien (Bifidobacterium).

Molke ist die wässrige grünlich-gelbe Restflüssigkeit, die bei der Käseherstellung entsteht. Sie ist der flüssige Teil, der nach der Gerinnung der Milch zu Käse oder Quark abgesondert werden kann. Sauermolke entsteht, wenn Milch mit Milchsäurebakterien behandelt wird.

Es empfiehlt sich, Milchzuckerlösungen mit einer ausreichend hohen Feststoffmenge (synonym: Trockenmasse) einzusetzen, um das erfindungsgemäße Verfahren mit ökonomisch sinnvollen Umsätzen und Ausbeuten durchführen zu können. Hierzu eignen sich Lösungen, die eine Feststoffmenge von etwa 25 bis etwa 50 Gew.-% und vorzugsweise etwa 30 bis etwa 35 Gew.-% aufweisen. Gegebenenfalls können technische Milchzuckerlösungen beispielsweise durch Umkehrosmose ("reverse osmosis RO") entsprechend aufkonzentriert werden.

### Entkeimung

Im ersten Schritt des erfindungsgemäßen Verfahrens werden die wässrigen Milchzuckerlösungen entkeimt. Darunter ist jeder Prozess zu verstehen, mit dem sich die Keimlast des natürlichen Ausgangsproduktes auf einen Wert vermindern lässt, der unter dem liegt, den die jeweiligen nationalen Prüfstellen als Schwelle für die Zulassung als Lebensmittel festgelegt haben. In der Regel werden die Milchzuckerlösungen auf unter 1.000 Keime/mL entkeimt, vorzugsweise auf unter 500 Keime/mL und insbesondere etwa 10 bis etwa 50 Keime/mL. Die bevorzugte Entkeimungsmethode ist eine Hochtemperaturbehandlung, bei der die Lösungen einer Temperatur im Bereich von etwa 70 bis etwa 150 °C, vorzugsweise etwa 90 bis etwa 120 C über etwa 3 bis etwa 300 Sekunden, vorzugsweise etwa 50 bis etwa 200 Sekunden ausgesetzt werden. Alternativ kann statt einer Pasteurisierung auch eine Mikrofiltration durchgeführt werden. Eine Entkeimung kann entfallen, wenn bereits eine entkeimte Milchzuckerlösung eingesetzt wird.

### Thermische Desaktivierung von Enzymen

Die Transgalactosilierung wird vorzugsweise solange durchgeführt, bis die höchste GOS-Konzentration erreicht ist. Dieser durch Enzym und Reaktionsbedingungen bedingte Wert kann durch Probennahme verfolgt und damit vom Fachmann leicht ermittelt werden. Ist das Maximum der GOS-Bildung erreicht, muss die Aktivität der Enzyme sehr schnell gestoppt werden, um eine Rückspaltung zu vermeiden. Dies erfolgt durch schnelle Hocherhitzung, bei der das Enzymmaterial vollständig denaturiert wird. Über die Dauer der Desaktivierung wird die Viskosität bzw. Festigkeit des Produktes eingestellt. Kurze Zeiten von 1 bis 5 Minuten begünstigen hohe Festigkeiten, während längere Zeiten von bis zu 15 Minuten zu Produkten mit einer Textur von Mozzarella oder Frischkäse führen. Die Abtrennung der desaktivierten Enzyme ist optional und erfolgt vorzugsweise durch Filtration die vorzugsweise kontinuierlich durchgeführt wird.

### Konfektionierung

Das nach thermischer Desaktivierung und gegebenenfalls Abtrennung der desaktivieten Enzymmasse erhaltene Produkt weist je nach Desaktivierungszeit sowie gegebenenfalls einer Reifungszeit von etwa 12 bis etwa 36 h eine feste bis gelartige Konsistenz auf und kann in dieser Form unmittelbar abgefüllt und in den Handel gebracht werden. Für die Anwendung als Käseersatzstoff empfiehlt es sich jedoch dem Produkt weitere Zusatzstoffe beizufügen, als da sind: pflanzliche Proteine, pflanzliche Fettem Aromastoffe, Ballaststoffe, Verdickungsmittel (Hydrokolloide) Genusssäuren, Lab, Salze und/oder Farbstoffe. Die Zugabe kann während der Konfektionierung beispielsweise durch Eindosieren und Homogenisieren erfolgen. Es ist jedoch auch möglich, die Stoffe schon während oder unmittelbar nach der Desaktivierung zuzugeben. Die eigentliche Konfektionierung kann in der Kälte bei etwa 5 bis etwa 21 °C oder vorzugsweise in der Wärme bei etwa 25° bis etwa 35°C durchgeführt werden.

### GEWERBLICHE ANWENDBARKEIT

Ein weiterer Gegenstand der vorliegenden Erfindung betrifft die Verwendung der Produkte - mit oder ohne Zusatzstoffe - als kalorienarme oder kalorienfreie Käseersatzstoffe.

### BEISPIELE

### Beispiel 1

### Thermische Desaktivierung der Enzymmasse

1000 kg einer Magermilch mit 35-50 Gew.-% Trockenmasse wurde in einem Röhrenwärmeaustauscher über 120 Sekunden auf 98 °C erhitzt und dabei entkeimt. Die entkeimte Lösung wurde auf 50 C abgekühlt, in einen Fermenter überführt, mit beta-Galactosidase *aus Bacillus circulans* im Gewichtsverhältnis Enzym:Substrat von 1:500 versetzt und gerührt. Der Fortschritt der Transgalactosilierung wurde durch Probennahme verfolgt. Nach etwa 15 Minuten Enzymierungszeit wird das spätere Viskositätsmaximum erreicht. Die Reaktionsmischung wurde anschließend innerhalb von 30 Sekunden auf 98 C erhitzt und dort für weitere 120 Sekunden belassen. Schon während der Desaktivierung wurde ein fortschreitender Anstieg der Viskosität festgestellt. Das resultierende Endprodukt zeigte zunächst eine gelförmige Konsistenz, die sich allmählich zu einer schnittfesten Textur verfestigte.

### Beispiel 2

### Thermische Desaktivierung der Enzymmasse

1000 kg einer Magermilch mit 30-50 Gew.-% Trockenmasse wurde in einem Röhrenwärmeaustauscher über 120 Sekunden auf 98 °C erhitzt und dabei entkeimt. Die entkeimte Lösung wurde auf 50 C abgekühlt, in einen Fermenter überführt, mit beta-Galactosidase *aus Bacillus circulans* im Gewichtsverhältnis Enzym:Substrat von 1:500 versetzt und gerührt. Der Fortschritt der Transgalactosilierung wurde durch Probennahme verfolgt. Nach etwa 15 Minuten Enzymierungszeit wurde das spätere Viskositätsmaximum erreicht. Die Reaktionsmischung wurde anschließend innerhalb von 30 Sekunden auf 98 C erhitzt und dort für weitere 10 Minuten belassen. Schon während der Desaktivierung wurde ein fortschreitender Anstieg der Viskosität festgestellt. Das resultierende Endprodukt zeigte gelförmige Konsistenz, ähnlich einer Mozzarellagrundmasse.

### Beispiel 3

### Thermische Desaktivierung der Enzymmasse

1000 kg einer Magermilch mit 30-50 Gew.-% Trockenmasse wurde in einem Röhrenwärmeaustauscher über 120 Sekunden auf 98 °C erhitzt und dabei entkeimt. Die entkeimte Lösung wurde auf 50 C abgekühlt, in einen Fermenter überführt, mit Lab sowie beta-Galactosidase *aus Bacillus circulans* im Gewichtsverhältnis Enzym:Substrat von 1:500 versetzt und gerührt. Der Fortschritt der Transgalactosilierung wurde durch Probennahme verfolgt. Nach etwa 15 Minuten Enzymierungszeit wurde das spätere Viskositätsmaximum erreicht. Die Reaktionsmischung wurde anschließend innerhalb von 30 Sekunden auf 98 C erhitzt und dort für weitere 10 Minuten belassen. Schon während der Desaktivierung wurde ein fortschreitender Anstieg der Viskosität festgestellt. Das resultierende Endprodukt zeigte gelförmige Konsistenz, ähnlich einem Halloumi-Käse.

### Vergleichsbeispiel V1

### Desaktivierung der Enzymmasse durch pH-Shift

1000 kg einer Magermilch mit 30-50 Gew.-% Trockenmasse wurde in einem Röhrenwärmeaustauscher über 120 Sekunden auf 98 °C erhitzt und dabei entkeimt. Die entkeimte Lösung wurde auf 50 C abgekühlt, in einen Fermenter überführt, mit beta-Galactosidase *aus Bacillus circulans* im Gewichtsverhältnis Enzym:Substrat von 1:500 versetzt und gerührt. Der Fortschritt der Transgalactosilierung wurde durch Probennahme verfolgt. Nach etwa 15 Minuten Enzymierungszeit wurde das spätere Viskositätsmaximum erreicht. Der pH-Wert wurde durch Zugabe von 30 Gew.-%iger Natronlauge innerhalb von wenigen Minuten auf 10,0 eingestellt, wodurch die Aktivität des Enzyms schlagartig um 80 % verringert wurde. Es wurde kein Viskositätsanstieg beobachtet, das resultierende Produkt war flüssig und niedrigviskos.

### Vergleichsbeispiel V2

### Einsatz von Sauermolke

1000 kg einer ca. 30 Gew.-%igen Sauermolke (pH = 5,1) wurde in einem Röhrenwärmeaustauscher über 5 Minuten auf 98 °C erhitzt und dabei entkeimt. Die entkeimte Lösung wurde auf 50 C abgekühlt, in einen Fermenter überführt, mit beta-Galactosidase aus *Aspergillus oryzae* im Gewichtsverhältnis Enzym:Substrat von 1:500 versetzt und gerührt. Der Fortschritt der Transgalactosilierung wurde durch Probennahme verfolgt. Nach etwa 90 Minuten war die maximale GOS-Konzentration erreicht. Die Reaktionsmischung wurde anschließend innerhalb von 30 Sekunden auf 98 C erhitzt und dort für weitere 10 Minuten belassen. Es wurde kein Viskositätsanstieg beobachtet, das resultierende Produkt war flüssig und niedrigviskos.

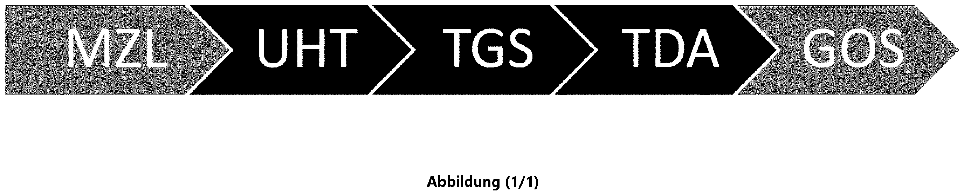

Der Prozess wird ferner an Hand eines Fließschemas gemäß **Abbildung 1** näher erläutert; dabei bedeuten die Abkürzungen:
- MZL: : Milchzuckerlösung
- UHT: : Ultrahocherhitzung
- TGS: : Transgalactosilierung
- TDA: : Thermische Desaktivierung
- GOS: : Galactooligosaccharide

### Formulierungsbeispiel

### Mozzarella-ähnlicher Käseersatz

| **Komponente** | **F1** |
|---|---|
| GOS-Produkt nach Beispiel 2 | 80,0 |
| Kartoffelprotein | 10,0 |
| Kochsalz | 2,0 |
| Inulin | 1,0 |
| Aromastoff | 1,0 |
| Farbstoff | 0,5 |
| Milchsäure | 0,5 |
| Wasser | 5,0 |

## Patentansprüche

1. Kalorienarme Lebensmittel, erhalten oder erhältlich durch die folgenden Schritte:
(a) Bereitstellen einer wässrigen Lösung enthaltend, bestehend oder weitgehend bestehend aus Milchproteinen und Lactose;
(b) Konzentrierung der wässrigen Lösung aus Schritt (a);
(c) Entkeimung der wässrigen Lösung aus Schritt (b) durch Pasteurisierung oder Mikrofiltration;
(d) Transgalactosilierung der in der entkeimten wässrigen Lösung aus Schritt (c) vorhandenen Milchzucker unter Zugabe mindestens einer beta-Galactosidase innerhalb deren optimalen Temperatur- und pH-Wert-Intervalls über einen Zeitraum von mindestens 30 Minuten unter Erhalt einer Reaktionsmischung,
(e) Desaktivierung der Enzymmasse in der Reaktionsmischung aus Schritt (d) durch thermische Behandlung über einen Zeitraum von etwa 1 bis etwa 15 Minuten und
(f) Konfektionierung des so erhaltenen Produktes.

2. Lebensmittel nach Anspruch 1, **dadurch gekennzeichnet, dass** es weiterhin pflanzliche Proteine, pflanzliche Fette, Aromastoffe, Ballaststoffe, Verdickungsmittel, Genusssäuren, Lab, Salze und/oder Farbstoffe enthält.

3. Lebensmittel nach den Ansprüchen 1 und/oder 2, **dadurch gekennzeichnet, dass** es jeweils bezogen auf das Gesamtgewicht folgende Zusammensetzung aufweist,
(i) etwa 5 bis etwa 20 Gew.-% des Produktes gemäß Anspruch 1,
(ii) 0 bis etwa 20 Gew.-% pflanzliche Proteine;
(iii) 0 bis etwa 20 Gew.-% pflanzliche Fette;
(iv) 0 bis etwa 10 Gew.-% Aromastoffe;
(v) 0 bis etwa 2 Gew.-% Ballaststoffe;
(vi) 0 bis etwa 2 Gew.-% Verdickungsmittel;
(vii) 0 bis etwa 2 Gew.-% Genusssäuren;
(viii) 0 bis etwa 2 Gew.-% Salze;
(ix) 0 bis etwa 1 Gew.-% Lab;
(x) 0 bis etwa 0,5 Gew.-% Farbstoffe
mit der Maßgabe, dass sich die Mengenangaben gegebenenfalls mit Wasser zu 100 Gew.-% ergänzen.

4. Lebensmittel nach mindestens einem der Ansprüche 1 bis 3, **dadurch gekennzeichnet, dass** es sich um ein Käseersatzprodukt handelt.

5. Lebensmittel nach Anspruch 4, **dadurch gekennzeichnet, dass** es die Textur eines Schnittkäses, eines Mozzarellas oder eines Frischkäses aufweist.

6. Verfahren zur Herstellung von kalorienarmen Lebensmitteln, umfassend die folgenden Schritte:
(a) Bereitstellen einer wässrigen Lösung enthaltend, bestehend oder weitgehend bestehend aus Milchproteinen und Lactose;
(b) Konzentrierung der wässrigen Lösung aus Schritt (a);
(c) Entkeimung der wässrigen Lösung aus Schritt (b) durch Pasteurisierung oder Mikrofiltration;
(d) Transgalactosilierung der in der entkeimten wässrigen Lösung aus Schritt (c) vorhandenen Milchzucker unter Zugabe mindestens einer beta-Galactosidase innerhalb deren optimalen Temperatur- und pH-Wert-Intervalls über einen Zeitraum von mindestens 30 Minuten unter Erhalt einer Reaktionsmischung,
(e) Desaktivierung der Enzymmasse in der Reaktionsmischung aus Schritt (d) durch thermische Behandlung über einen Zeitraum von etwa 1 bis etwa 15 Minuten und
(f) Konfektionierung des so erhaltenen Produktes.

7. Verfahren nach Anspruch 6, **dadurch gekennzeichnet, dass** man die Entkeimung durch eine Hochtemperaturbehandlung bewirkt.

8. Verfahren nach den Ansprüchen 6 und/oder 7, **dadurch gekennzeichnet, dass** man die Pasteurisierung bei einer Temperatur im Bereich von etwa 70 bis etwa 150 °C und über etwa 3 bis etwa 300 Sekunden durchführt.

9. Verfahren nach mindestens einem der Ansprüche 6 bis 8, **dadurch gekennzeichnet, dass** man als beta-Galactosidase Enzyme aus *Aspergillus oryzae* und/oder *Bacillus circulans* einsetzt.

10. Verfahren nach mindestens einem der Ansprüche 6 bis 9, **dadurch gekennzeichnet, dass** man die Transgalactosilierung durch Zugabe von *Aspergillus oryzae* bei einer Temperatur im Bereich von etwa 50 bis etwa 60 °C und einem pH-Wert von etwa 4 bis etwa 5 durchführt.

11. Verfahren nach mindestens einem der Ansprüche 6 bis 10, **dadurch gekennzeichnet, dass** man die Transgalactosilierung durch Zugabe von *Bacillus circulans* bei einer Temperatur im Bereich von etwa 45 bis etwa 55 °C und einem pH-Wert von etwa 5,5 bis etwa 6,5 durchführt.

12. Verfahren nach mindestens einem der Ansprüche 6 bis 11, **dadurch gekennzeichnet, dass** man die Transgalactosilierung über einen Zeitraum von etwa 10 bis etwa 120 min durchführt.

13. Verfahren nach mindestens einem der Ansprüche 6 bis 12, **dadurch gekennzeichnet, dass** man dem Lebensmittel vor der Konfektionierung pflanzliche Proteine, Aromastoffe, Ballaststoffe, Genusssäuren, Salze und/oder Farbstoffe zusetzt.

14. Verfahren nach mindestens einem der Ansprüche 6 bis 13, **dadurch gekennzeichnet, dass** man die Konfektionierung in der Kälte bei etwa 5 bis etwa 21 °C oder in der Wärme bei etwa 25 bis etwa 35°C durchführt.

15. Verwendung der Produkte nach Anspruch 1 als kalorienarme Käseersatzstoffe.
